# EUROPEAN PATENT APPLICATION

(11) **EP 2 200 326 A1**
(43) Date of publication of application: **23.06.2010**
(21) Application number: 08305964.2
(22) Date of filing: 18.12.2008
(51) Int. Cl.: H04N 7/50, H04N 7/26

(54) **Method and device for encoding a block of an image using a reference block of a further image, data carrier carrying an encoded block of an image and method for decoding a block of an image**

(71) Applicant: Thomson Licensing, 92443 Issy-les-Moulineaux Cedex (FR)
(72) Inventor: Wu, Yuwen, 100085 Beijing (CN)
(74) Representative: Rittner, Karsten

(57) **Abstract**

A method for image encoding is proposed.

Said method is a method for encoding a block of an image using a reference block of a further image and comprises the steps of extracting, from the block, a first block of a first colour component, determining said reference block such that a first colour component reference block extracted from said reference block matches said first block best and using at least a part of the remainder of said reference block for encoding at least a part of the remainder of said block.

The reference block having a first colour component, which matches the first colour component of the block to-be-encoded, often is a well suited starting point for search for a reference block for a remaining colour component, or if more than one colour component remain, for one or all of the remaining colour components, too.

## Description

### Background

The invention is related to a method and device for encoding a block of an image using a reference block of a further image, to data carrier carrying an encoded block of an image and to method for decoding a block of an image.

More precisely, the invention is related to separated, but inter-related encoding of colour components of an image using inter-prediction, i.e. using a reference image.

For representing the colour of a pixel three colour components are necessary. The three colour components may be the colours red, green and blue (RGB). Or, the colour components comprise a luminance component (Y) and two chrominance components (UV or CrCb). The chrominance components are also known as colour difference components.

Therefore, a coloured image may be separated into three colour component images.

For inter-encoding a block of such image two different approaches are known: Either, a single reference block is determined such that the overall rate-distortion of all colour components is optimized. Or, the block is split up into three blocks of the three colour components. Then, for each of the three blocks a reference block optimizing the rate-distortion with respect to the corresponding colour component is determined, individually.

The former approach requires only a single search for a best matching block but comes along with an increased bit rate compared to the latter approach.

In the context of advanced video coding (AVC) High444 profile, also known as H.264 High444 profile, the former approach is termed unified coding while the latter is termed separable coding.

Which of the two approaches is applied is under control of a high level syntax element "colour_plane_id" which is in slice_header and controls the coding mode of all blocks in the slice. In other words, all blocks in the same slice will be coded in the same coding mode: separable mode or unified mode.

It is noted that the term "block" is used for any block of an image independent of block size. The term block may refer to an 8x8 block, to an 16x16 macroblock, to an rectangle of n rows and m coloums or to the entire image.

It is desirable to have more flexibility in encoding of blocks.

### Invention

The invention provides more flexibility by proposing a third approach characterized by the features of the method of claim 1. A corresponding device comprises the features of claim 7.

Said method is a method for encoding a block of an image using a reference block of a further image and comprises the steps of extracting, from the block, a first block of a first colour component, determining said reference block such that a first colour component reference block extracted from said reference block matches said first block well according to a matching criterion and using at least a part of the remainder of said reference block for encoding at least a part of the remainder of said block.

The inventor recognized that the reference block having a first colour component, which matches the first colour component of the block to-be-encoded, often is a well suited starting point for searching a reference block for a remaining colour component, or, if more colour components remain, for one or all of the remaining colour components, too.

Claims 2-6 are related to particular embodiments of the encoding method and claims 8-12 are related to particular embodiments of said encoding device.

In an embodiment according to claim 2, the method comprises encoding motion information representing the spatio-temporal relationship between the block and the reference block, and encoding an indicator indicating that the motion information is to be used for decoding at least a part of the remainder of said block.

Thus, instead of re-sending re-used motion information an indicator indicating that the motion information is re-used is send. This saves bandwidth.

The invention further relates to a data carrier carrying an encoded block of an image, said block being encoded according to claim 2.

The invention is also related to a method and device for decoding a block of an image, said decoding method comprises the features of claim 13 and said decoding device comprises the features of claim 14.

Said decoding method and decoding device are suited for decoding a block encoded according to claim 2.

### Drawings

Exemplary embodiments of the invention are illustrated in the drawings and are explained in more detail in the following description.

In the figures:
- Fig. 1: depicts an exemplary embodiment of the inventive encoding framework, and
- Fig. 2: depicts a corresponding decoding framework.

### Exemplary embodiments

So-called video format 444 comes with higher bit colour depth than the conventional 420 and 422 eight bit colour depth. Such higher colour depth is more and more desirable in many fields, such as scientific imaging, digital cinema, high-quality-video-enabled computer games, and professional studio and home theatre related applications.

Accordingly, video coding standard H.264/AVC has included Fidelity Range Extensions, which support up to 12 bits per sample and up to 4:4:4 chroma sampling.

Video coding standard H.264/AVC supports chroma format 444 by profile High444. Per slice, High444 allows for choosing one of two possible inter coding modes which is applicable for all colour components -also called colour planes, i.e. for luminance and chrominances in YUV or YCrCb colour space or for red green and blue in RGB colour space.

Said possible coding modes are separable coding and unified coding.

Under the unified coding mode, the three blocks located at the same position in the three planes and constituting an image block when being combined share the same block coding information (e.g. block coding type and motion vector) whereby the reference block used for encoding of all the three blocks is determined using all colour components of a block to-be-encoded and of reference block candidates.

Under the separable coding mode, the plane blocks are treated individually and independently. For each colour component of the image block, an individual reference block in the corresponding plane is determined. Thus, motion vectors and/or coding type may differ and therefore need to be encoded for each plane block individually.

As said, whether unified coding mode or separable coding mode is applied is decided per slice. Which of the modes is applied is indicated under H.264 by a syntax element called "colour_plane_id" which is encoded in a slice header and controls all blocks in one slice. In other words, all blocks in the same slice will be coded using the same coding mode: Either separable mode or unified mode.

Separable coding mode results in better compression for the price of extra encoding effort as best-matching or at least well-matching reference block, if search for the reference block is terminated after a threshold has been reached, have to be determined for all colour components. The matching criterion may be a distortion, a similarity or a rate-distortion between a plane block to-be-encoded and a reference block candidate of the same plane wherein the distortion, the similarity or the rate-distortion at least has to reach a matching threshold or even has to be optimized.

In an exemplary embodiment of the invention, said extra effort can be reduced significantly. That is after determining a first reference block for use in encoding of a first colour plane, a starting block which is located in a second colour plane at the same position as said first reference block in the first colour plane is used as starting point for the search of a second reference block for use in encoding of a second colour plane.

If reference search is terminated by a threshold criterion, search for the second reference block can be stopped in most cases after determining said starting block. This is because said starting block is likely to meet the threshold criterion, already.

So, although separable coding mode is used it is likely in the exemplary embodiment that at least two of the colour planes of an image block refer to planes of the same reference block and therefore require the same motion information, e.g. the same motion vector expressing the relative spatio-temporal relation, to be encoded.

Thus, in a further exemplary embodiment some bandwidth is saved by just indicating the re-use of the motion information instead of encoding the re-used motion information for each plane block, separately.

In another embodiment, a first block of a first colour component and a second block of a second and/or a third colour component are extracted from the block to-be-encoded. Then, a first reference block is determined such that a distortion of said first block with respect to a first colour component reference block extracted from said reference block is below a first distortion threshold. Further, motion information representing the spatio-temporal relationship between the block and the reference block is determined and encoded. The determined reference block is also used as starting block for a search for a further reference block to be used for encoding said second block. Said search comprises, as a first step, determining a distortion using a second colour component reference block of said reference block and said second block and comparing the determined distortion with a second distortion threshold which may equal or differ from the first threshold. If the determined distortion is below the second distortion threshold, said search is terminated and an indicator, which indicates that the motion information is to be used for decoding said second block, is encoded.

If so, the decoder needs to be adapted accordingly. That is, the decoder need to comprise means for detecting said indication and copying the motion information from the first colour component.

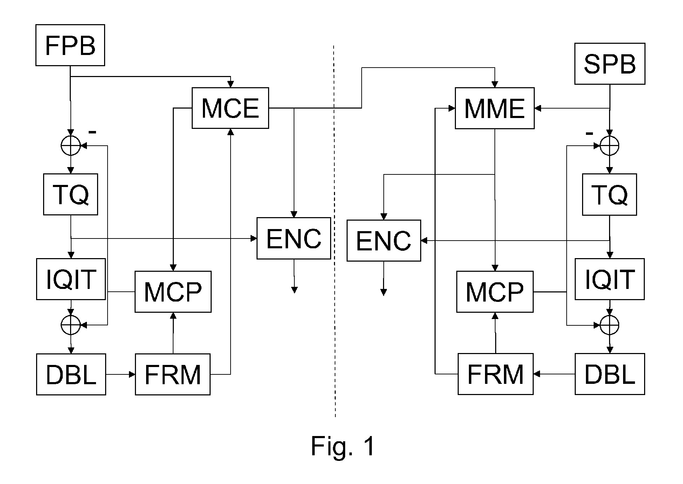

Figure 1 exemplarily shows the framework the encoder. A first Plane Block (FPB) is received and motion is estimated (MCE). The motion estimate is used for motion compensation (MCP) and a residual is formed by subtraction. The residual is transformed and quantized (TQ) and inverse quantized and inverse transformed (IQIT), subsequently. The output of motion compensation (MCP) is added and the result is subject to deblocking filtering (DBL). The reconstructed and deblocked plane block is memorized in a memory (FRM) such that motion compensation (MCP) and motion estimation (MCE) can make use of memorized frames of the first plane.

Similarly, a current Plane Block (CPB) is received and modified motion estimation (MME) is applied. The output of modified motion estimation (MME) is used for motion compensation (MCP) and subsequent residual encoding much the same way as for the first Plane Block (FPB).

The modified motion estimation (MME) is initiated by the motion estimation (MCE) result for the first plane block (FPB). Then, the current Plane Block (CPB) is compared with a motion compensated block generated by help of the first plane motion estimate (MCE). For instance, a distortion is determined and the determined distortion is compared with the threshold. If the determined distortion is below the threshold, result of the first plane motion estimation (MCE) is passed to the second plane motion compensation. Further, an indicator is passed to the encoder (ENC) for encoding wherein said indicator indicates that motion information encoded together with the residual of the first plane block is to be used for reconstructing the current plane block during decoding.

If the determined distortion is above the threshold, the current plane block is compared with further current plane reference candidate blocks until a well matching current plane reference block is found.

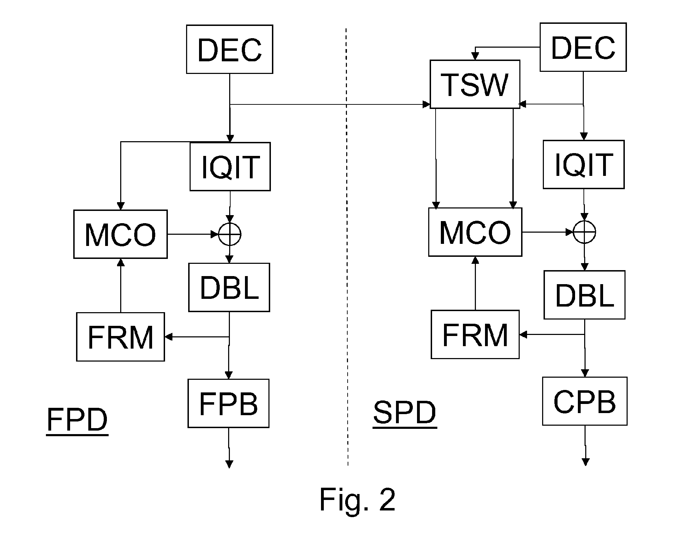

Figure 2 exemplarily shows a corresponding decoding framework. A triggered switch (TSW) is triggered by an indicator resulting from decoding (DEC) in a second plane decoding (SPD) and either passes motion information resulting from a first plane's decoding (FPD) decoder (DEC) or motion information resulting from the second plane's decoding (FPD) decoder (DEC) in dependency on the indicator. The passed motion information is then used for further decoding. The indicator may be a flag bit.

## Claims

1. Method for encoding a block of an image using a reference block of a further image, said method comprises the steps of
- extracting, from the block, a first block of a first colour component,
- determining said reference block such that a first colour component reference block extracted from said reference block matches said first block well according a matching criterion and
- using at least a part of the remainder of said reference block for encoding at least a part of the remainder of said block.

2. Method of claim 1, further comprising
- encoding motion information representing the spatio-temporal relationship between the block and the reference block, and
- encoding an indicator indicating that the motion information is to be used for decoding at least a part of the remainder of said block.

3. Method of claim 1 or 2, further comprising
- receiving a control signal indicating that at least a part of the block remainder is to be encoded using at least a part of the reference block remainder.

4. Method of claim 2, further comprising
- determining one or more distortions using said block remainder and said reference block remainder, and
- generating at least one control signal in response to the determined distortions wherein
- the at least one control signal indicates whether at least one further reference block is to be used instead of or together with the reference block remainder for encoding of the block remainder.

5. Method of one of the preceding claims, wherein
- said first block and said first colour component reference block are luminance blocks and
- said remainder and said reference remainder comprise chrominance blocks.

6. Method of claim 5, wherein
- each of said remainder and said reference remainder comprises a first chrominance component block and a second chrominance component block and
- for encoding of the first chrominance block of the remainder the first chrominance block of the reference remainder is used and
- for encoding of the second chrominance block of the remainder the second chrominance block of the reference remainder is used.

7. Device for encoding a block of an image using a reference block of a further image, comprising
- means for extracting, from the block, a first block of a first colour component,
- means for determining said reference block such that a first colour component reference block extracted from said reference block matches said first block well according a matching criterion and
- means for encoding at least a part of the remainder of said block using at least a part of the remainder of said reference block.

8. Device of claim 7, further comprising
- means for encoding motion information and
- means for encoding an indicator indicating that the motion information is to be used for decoding at least a part of the remainder.

9. Device of claim 7 or 8, wherein
- the means for encoding are adapted for receiving a control signal indicating that at least a part of the block remainder is to be encoded using at least a part of the reference block remainder.

10. Device of claim 8, further comprising
- means for determining one or more distortions using said block remainder and said reference block remainder, and
- means for generating at least one control signal in response to the determined distortions wherein
- the at least one control signal indicates whether at least one further reference block is to be used instead of or together with the reference block remainder for encoding of the block remainder.

11. Device of one of the claims 7 to 9, wherein
- said first block and said first colour component reference block are luminance blocks and
- said remainder and said reference remainder comprise chrominance blocks.

12. Device of claim 7, wherein
- each of said remainder and said reference remainder comprises a first chrominance component block and a second chrominance component block and
- for encoding of the first chrominance block of the remainder the first chrominance block of the reference remainder is used and
- for encoding of the second chrominance block of the remainder the second chrominance block of the reference remainder is used.

13. Method for decoding a block of an image, said method comprises the steps of
- decoding motion information,
- using the motion information for determining a reference block,
- decoding a first colour component block of said block using a first colour component reference block comprised in said reference block and
- decoding an indicator indicating that at least a part of a remainder further comprised in said reference block is to be used for decoding at least a part of a remainder of said block.

14. Device for decoding a block of an image, said method comprises the steps of
- means for decoding motion information,
- means for using the motion information for determining a reference block,
- means for decoding a first colour component block of said block using a first colour component reference block comprised in said reference block and
- means for decoding an indicator indicating that at least a part of a remainder further comprised in said reference block is to be used for decoding at least a part of a remainder of said block.

15. Data carrier carrying an encoded block of an image, said block being encoded according to claim 2.
